# EUROPEAN PATENT SPECIFICATION

(11) **EP 4 318 299 B1**
(45) Date of publication and mention of the grant of the patent: **27.08.2025**
(21) Application number: 22794772.8
(22) Date of filing: 22.04.2022
(51) Int. Cl.: G06F 40/186, G06F 40/56

(54) **DOCUMENT GENERATION METHOD AND APPARATUS AND ELECTRONIC DEVICE**
DOKUMENTERZEUGUNGSVERFAHREN UND -VORRICHTUNG UND ELEKTRONISCHE VORRICHTUNG
PROCÉDÉ ET APPAREIL DE GÉNÉRATION DE DOCUMENT ET DISPOSITIF ÉLECTRONIQUE

(30) Priority: 29.04.2021 CN 202110474177
(43) Date of publication of application: 07.02.2024
(73) Proprietor: Vivo Mobile Communication Co., Ltd., Dongguan, Guangdong 523863 (CN)
(72) Inventor: ZHU, Zongwei, Dongguan, Guangdong 523863 (CN); GUO, Yongchang, Dongguan, Guangdong 523863 (CN)
(74) Representative: Murgitroyd & Company
(86) International application number: PCT/CN2022/088427
(87) International publication number: WO 2022/228301

(56) References cited:
- CN-A- 102 831 106
- CN-A- 104 794 104
- CN-A- 107 358 227
- CN-A- 112 396 675
- CN-A- 113 139 367
- US-A1- 2006 008 156
- US-A1- 2014 078 559
- US-A1- 2016 062 557

## Description

### TECHNICAL FIELD

This application belongs to the field of image processing technologies, and specifically, relates to a document generation method and apparatus.

### BACKGROUND

A photography function of mobile phones greatly facilitates people's lives, and provides convenience for recording content of life and work. However, a conventional photography function of mobile phones cannot meet a requirement in some specific scenarios, for example, quickly converting slideshow pictures of meeting content into a document. In this case, a user needs to use another tool to perform an operation, which is time-consuming and labor-intensive.

D1 (US2014/0078559Al) discloses a method of generating an electronic document for mobile terminals. The method includes: obtaining a tar-get image to be scanned and recognized; performing image and text scanning and recognition on the target image and obtaining a scanning and recognition result; generating an electronic document based on the scanning and recognition result. A mobile terminal is also described. According to the method, a user can generate electronic documents from infor-mation of interest to the user whenever and wherever, using a mobile terminal, thereby greatly enhancing the capability of the user to obtain information while traveling.

D2 (CN 107358227A) discloses a scanning recognition processing method. The method includes obtaining the target image to be scanned and identified; identifying mark characters in the target picture having different regions of light reflection coefficients, where the regions having different light reflection coefficients are light regions that are pre-selected by the user according to requirements and have no light difference with the unselected region; recording location information of the mark character in the target picture and store the information; and rearranging the recognized mark characters according to the position information to obtain the scan identification result and display the result.

D3 (US2016/0062557Al) discloses a method for processing contents at an electronic device. The method includes generating a first content corresponding to a user input applied to content via the electronic device, and displaying a floating user interface (UI), which displays first scrap information on the first content, on a screen of the electronic device.

### SUMMARY

An objective of the embodiments of this application is to provide a document generation method and apparatus and an electronic device, to resolve a problem in the conventional technology that a photography function of a mobile phone cannot quickly convert a captured picture into a document.

According to a first aspect, an embodiment of this application provides a document generation method, which is defined in claim 1.

Further advantageous embodiments of the present disclosure are indicated in the dependent claims.

It is to be understood that both the forgoing general description and the following detailed description are exemplary only, and are not restrictive of the present disclosure.

### BRIEF DESCRIPTION OF THE DRAWINGS

FIG. 1 is a schematic flowchart of a document generation method according to an embodiment of this application;
FIG. 2 is a schematic diagram of a camera interface according to an embodiment of this application;
FIG. 3 is a schematic diagram of document types according to an embodiment of this application;
FIG. 4 is a schematic diagram of a creation mode for a target document whose document type is PPT according to an embodiment of this application;
FIG. 5 is a schematic diagram of a creation mode for a target document whose document type is WORD according to an embodiment of this application;
FIG. 6 is a schematic diagram of selecting, from a PPT document, a target component to which a picture is to be inserted according to an embodiment of this application;
FIG. 7 is a schematic diagram of capturing a picture in a PPT document according to an embodiment of this application;
FIG. 8 is a schematic diagram of selecting, from a WORD document, a target component to which a picture is to be inserted according to an embodiment of this application;
FIG. 9 is a schematic diagram of capturing a picture in a WORD document according to an embodiment of this application;
FIG. 10 is a schematic diagram of adding a picture to a notepad document according to an embodiment of this application;
FIG. 11 is a schematic structural diagram of a document generation apparatus according to an embodiment of this application;
FIG. 12 is a schematic structural diagram of an electronic device according to an embodiment of this application; and
FIG. 13 is a schematic diagram of a hardware structure of an electronic device for implementing the embodiments of this application.

### DETAILED DESCRIPTION

The following clearly describes the technical solutions in the embodiments of this application with reference to the accompanying drawings in the embodiments of this application.

The terms "first", "second", and the like in the specification and claims of this application are used to distinguish between similar objects, but not to indicate a specific order or sequence. It should be understood that the data used in this way is interchangeable in appropriate circumstances, so that the embodiments of this application can be implemented in an order other than the order illustrated or described herein. In addition, the objects distinguished by "first", "second", and the like usually belong to one category, and the number of objects is not limited. For example, there may be one or more first objects. In addition, in the specification and claims, "and/or" represents at least one of connected objects, and the character "/" typically represents an "or" relationship between the associated objects.

The following describes in detail a document generation method and apparatus and an electronic device in the embodiments of this application with reference to the accompanying drawings and by using specific embodiments and application scenarios thereof.

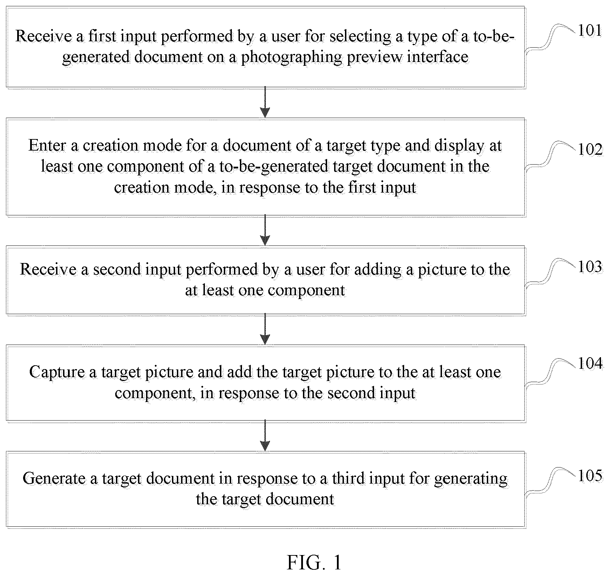

FIG. 1 is a schematic flowchart of a document generation method according to an embodiment of this application. As shown in FIG. 1, the document generation method in this embodiment of this application includes the following steps.

Step 101: Receive a first input performed by a user for selecting a type of a to-be-generated document on a photographing preview interface.

In this embodiment of this application, the document generation method is applied to an electronic device. After camera software of the electronic device is started, in a case that a document mode needs to be used, the user may select a document option on the photographing preview interface, and select the type of the to-be-generated document. The electronic device receives the first input performed by the user for selecting the type of to-be-generated document on the photographing preview interface. Optionally, document types in this embodiment of the application may include format types such as WORD, PowerPoint (PowerPoint, PPT), portable document format (Portable Document Format, PDF), and notepad.

Step 102: Enter a creation mode for a document of a target type and display at least one component of a to-be-generated target document in the creation mode, in response to the first input.

In this step, after receiving the first input, the electronic device enters the creation mode for the document of the target type in response to the first input. To be specific, after the user selects the type of the to-be-generated document on the photographing preview interface, the electronic device creates the document of the target type selected by the user (the document created herein is only a template), and displays the at least one component of the to-be-generated target document in the creation mode. The component of the target document is a structural composition of the target document. Components of different types of documents may be different. A component of a document may be preset or customized, or an existing document may be called.

Step 103: Receive a second input performed by a user for adding a picture to the at least one component.

After the at least one component of the to-be-generated target document is displayed, in a case that the user wants to add a picture to a specific component of the target document, the user only needs to select the corresponding component of the document, and then capture a to-be-added picture by using a camera. To be specific, the electronic device receives the second input performed by the user for adding the picture to the at least one component of the target document, where the component may be any component of the target document selected by the user, and the to-be-added picture may be captured by the camera in real time. A picture may be added to one component of the target document, or a picture may be added to two or more components of the target document. This depends on a requirement of the user.

Step 104: Capture a target picture and add the target picture to the at least one component, in response to the second input.

In this step, after receiving the second input, the electronic device starts the camera to capture the target picture and adds the captured target picture to the at least one component of the created target document, in response to the second input. To be specific, the target picture captured by the camera is quickly converted into the document of the target type selected by the user, and a process of converting the picture into a document is completed when photographing is completed.

Step 105: Generate a target document in response to a third input for generating the target document.

After the target picture is added to the at least one component of the to-be-generated target document, in a case that the electronic device receives the third input of generating the target document by the user, the electronic device generates the target document in response to the third input for generating the target document. The finally generated target document includes the target picture added to the at least one component in the foregoing step. This is equivalent to synchronously converting the picture into a document during photographing, and the target document can be immediately generated after the picture is captured. This greatly improves efficiency of converting the picture into a document, and eliminates a complex process of converting the picture into a document by using another software tool.

Therefore, in this embodiment of this application, the user may flexibly select a type of a to-be-created document on the photographing preview interface, and add a corresponding picture to any position in a document by capturing a picture in real time, to quickly convert the picture into a document and generate a document with a specific organizational structure required by the user.

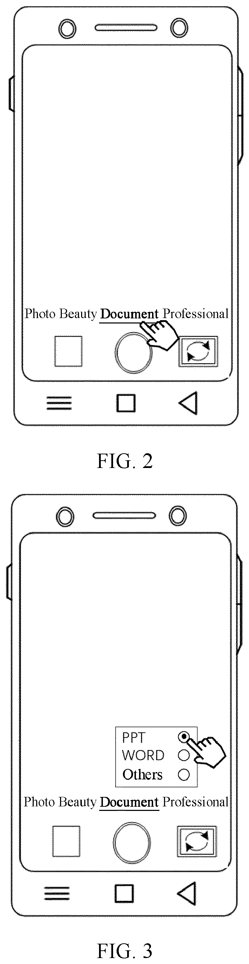

Refer to FIG. 2 and FIG. 3. FIG. 2 is a schematic diagram of a camera interface according to an embodiment of this application, and FIG. 3 is a schematic diagram of document types according to an embodiment of this application. As shown in FIG. 2 and FIG. 3, in some embodiments of this application, after the electronic device enters the photographing preview interface, options such as Photo and Document may be displayed on the photographing preview interface, and the first input may include tap input performed on the Document option. In a case that the Document option is tapped, it is considered that the user selects the document mode. In the document mode, a picture captured by the camera may be converted into a corresponding document. After the Document option is tapped, the electronic device may further display optional document types on the camera interface, and the document types may include WORD, PPT, Others, and the like.

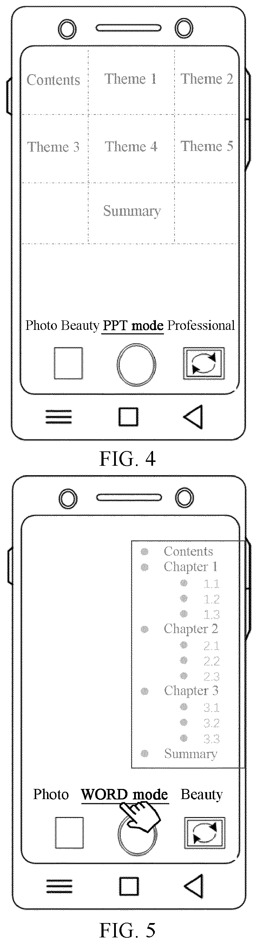

Refer to FIG. 4 and FIG. 5. FIG. 4 is a schematic diagram of a creation mode for a target document whose document type is PPT according to an embodiment of this application, and FIG. 5 is a schematic diagram of a creation mode for a target document whose document type is WORD according to an embodiment of this application. As shown in FIG. 4 and FIG. 5, in some embodiments of this application, the first input may alternatively include input of selecting the target type from the optional document types displayed above. After the target type is selected, the electronic device enters the creation mode for the document of the target type. In the creation mode, the at least one component of the target document, that is, at least a partial structural composition of the target document, is displayed. For example, as shown in FIG. 4, after the document type PPT is selected, the electronic device enters a creation mode for a PPT document. In the creation mode, components of the PPT document are displayed, including Contents, Theme 1, Theme 2, Theme 3, Theme 4, Theme 5, Summary, and the like. During displaying of the components of the PPT document, a directory list of the target document, that is, titles of components of the target document, may be displayed. For another example, as shown in FIG. 5, after the document type WORD is selected, the electronic device enters a creation mode for a WORD document. In the mode, components of the WORD document are displayed, including Chapter 1, Chapter 2, Chapter 3, Summary, and the like. During displaying of the components of the WORD document, a directory list of the target document, that is, titles of components of the target document, may be displayed.

In some embodiments of this application, the receiving a second input performed by a user for adding a picture to the at least one component includes:
receiving a first sub-input performed by the user for selecting a target component in the target document, and receiving a second sub-input performed by the user for capturing the target picture; and
the capturing a target picture and adding the target picture to the at least one component, in response to the second input includes:
   capturing the target picture and adding the target picture to the target component according to an order of photographing time, in response to the second input.

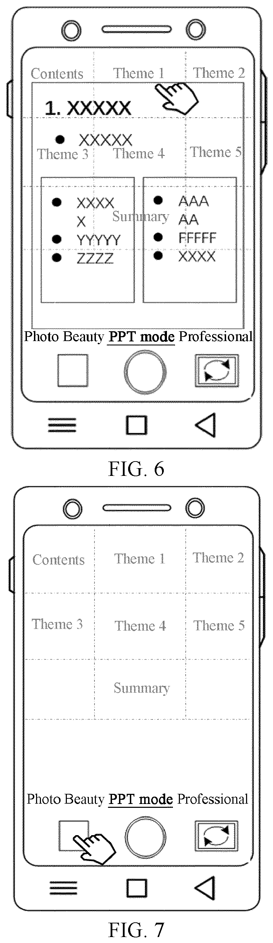

Refer to FIG. 6 and FIG. 7. FIG. 6 is a schematic diagram of selecting, from a PPT document, a target component to which a picture is to be inserted according to an embodiment of this application, and FIG. 7 is a schematic diagram of capturing a picture in a PPT document according to an embodiment of this application. As shown in FIG. 6 and FIG. 7, in this embodiment of this application, for example, a created document is a PPT document. After components of the document are displayed in the creation mode, in a case that the first sub-input performed by the user for selecting the target component in the target document and the second sub-input performed by the user for capturing a picture are received, for example, the first sub-input may be input of tapping the target component "Theme 1" of the document, and the second sub-input may be input of tapping the Photo button, the electronic device starts the camera for photographing in response to the second input, and sequentially adds, according to an order of photographing time, captured pictures to the target component (namely, "Theme 1") of the target document selected by the user. After the picture is added to the "Theme 1", another component of the target document may be further selected, and a picture is captured, to add the captured picture to the another component of the target document. After a final picture is captured, the user may tap an end button, and the electronic device ends photographing for current documenting, and saves a result (that is, a corresponding PPT document) of converting the picture into a document. The target document may be saved a document album. A default name of the target document may be a combination of a type of the target document and creation time of the target document.

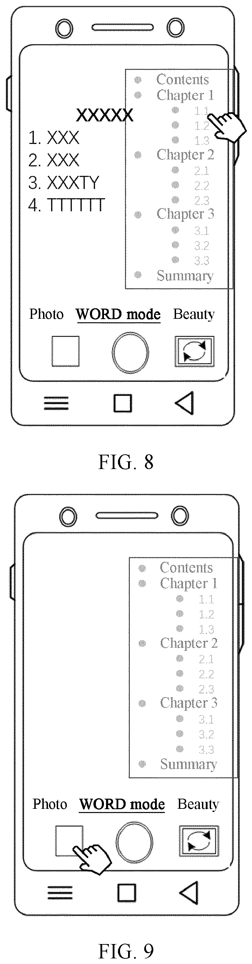

Refer to FIG. 8 and FIG. 9. FIG. 8 is a schematic diagram of selecting, from a WORD document, a target component to which a picture is to be inserted according to an embodiment of this application, and FIG. 9 is a schematic diagram of capturing a picture in a WORD document according to an embodiment of this application. As shown in FIG. 8 and FIG. 9, in this embodiment of this application, for example, a created document is a WORD document. After components of the target document are displayed in the creation mode, in a case that the first sub-input performed by the user for selecting the target component in the target document and the second sub-input performed by the user for capturing a picture are received, for example, the first sub-input may be input of tapping the target component "Chapter 1" of the target document, and the second sub-input may be input of tapping the Photo button, the electronic device starts the camera for photographing in response to the second input, and sequentially adds, according to an order of photographing time, captured pictures to the target component (namely, "Chapter 1") of the target document selected by the user. After the picture is added to the "Chapter 1", another component of the target document may be further selected, and a picture is captured, to add the captured picture to the another component of the target document. After a final picture is captured, the user may tap an end button, and the electronic device ends photographing for current documenting, and saves a result (that is, a corresponding WORD document) of converting the picture into a document. The target document may be saved a document album. A default name of the target document may be a combination of a type of the target document and creation time of the target document.

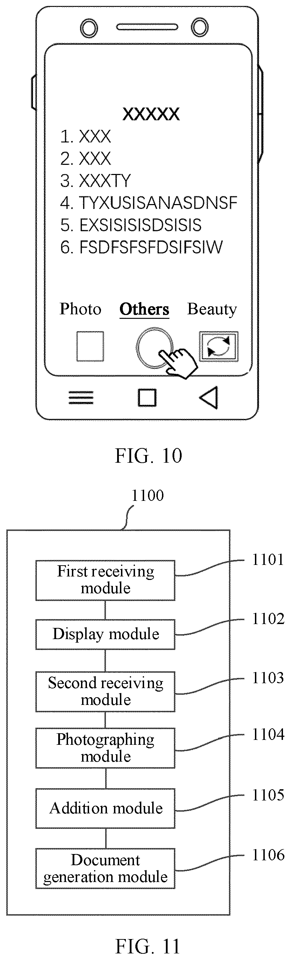

FIG. 10 is a schematic diagram of adding a picture to a notepad document according to an embodiment of this application. As shown in FIG. 10, in this embodiment of this application, for example, a created document is a notepad document. After components of the target document are displayed in the creation mode (the components of the notepad document may be empty, that is, displayed in blank), in a case that the first sub-input performed by the user for selecting the target component in the target document and the second sub-input performed by the user for capturing a picture are received, for example, the first sub-input may be input of tapping any position in the document, and the second sub-input may be input of tapping the Photo button, the electronic device starts the camera for photographing in response to the second input, and sequentially adds, according to an order of photographing time, captured pictures to the corresponding position in the target document selected by the user. After a final picture is captured, the user may tap an end button, and the electronic device ends photographing for current documenting, and saves a result (that is, a corresponding notepad document) of converting the picture into a document. The target document may be saved a document album. A default name of the target document may be a combination of a type of the target document and creation time of the target document.

In some other embodiments of this application, the document generation method further includes:
receiving a fourth input performed by a user for adjusting the target picture in the target document; and
adjusting a position of the target picture in the target document in response to the fourth input.

In an optional implementation, after captured pictures are sequentially added, according to an order of photographing time, to the target component of the target document selected by the user, in a case that the fourth input performed by the user for adjusting the target picture is received, in response to the fourth input, the electronic device adjusts an order of positions of the target pictures added to the target component of the target document, so that target pictures in a finally generated target document are coherent in content. In another optional implementation, an order of pictures may alternatively adjusted in a unified manner after all pictures are converted into documents. To be specific, after target pictures are added to all components of the target document, an order of target pictures in corresponding components is adjusted, so that target pictures in a finally generated target document are coherent in content.

In this embodiment of this application, the user may flexibly select a type of a to-be-created document on the photographing preview interface, and add a corresponding picture to any position in a document by capturing a picture in real time, to quickly convert the picture into a document and generate a document with a specific organizational structure required by the user.

It should be noted that the document generation method provided in the embodiments of this application may be performed by a document generation apparatus, or by a control module that is in the document generation apparatus and that is configured to perform the document generation method. In the embodiments of this application, a document generation apparatus provided in the embodiments of this application is described by using an example in which the document generation apparatus performs the document generation method.

FIG. 11 is a schematic structural diagram of a document generation apparatus according to an embodiment of this application. As shown in FIG. 11, the document generation apparatus 1100 in this embodiment of this application includes:
a first receiving module 1101, configured to receive a first input performed by a user for selecting a type of a to-be-generated document on a photographing preview interface;
a display module 1102, configured to enter a creation mode for a document of a target type and display at least one component of a to-be-generated target document in the creation mode, in response to the first input;
a second receiving module 1103, configured to receive a second input performed by a user for adding a picture to the at least one component;
a photographing module 1104, configured to capture a target picture in response to the second input;
an addition module 1105, configured to add the target picture to the at least one component in response to the second input; and
a document generation module 1106, configured to generate a target document in response to a third input for generating the target document.

The second receiving module 1103 includes:
a first receiving unit, configured to receive a first sub-input performed by the user for selecting a target component in the target document; and
a second receiving unit, configured to receive a second sub-input performed by the user for capturing the target picture; and
the addition module includes:
   an addition unit, configured to add the target picture to the target component according to an order of photographing time.

Optionally, the display module 1102 includes:
a display unit, configured to display a directory list of the target document in the creation mode.

Optionally, the document generation apparatus 1100 further includes:
a fourth receiving module, configured to receive a fourth input performed by a user for adjusting the target picture in the target document; and
an adjustment module, configured to adjust a position of the target picture in the target document in response to the fourth input.

In this embodiment of this application, the user may flexibly select a type of a to-be-created document on the photographing preview interface, and add a corresponding picture to any position in a document by capturing a picture in real time, to quickly convert the picture into a document and generate a document with a specific organizational structure required by the user.

The document generation apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, a vehicle-mounted electronic device, a wearable device, an ultra-mobile personal computer (ultra-mobile personal computer, UMPC), a netbook, or a personal digital assistant (personal digital assistant, PDA), and the non-mobile electronic device may be a personal computer (personal computer, PC), a television (television, TV), a teller machine, or a self-service machine. This is not specifically limited in this embodiment of this application.

The document generation apparatus in this embodiment of this application may be an apparatus with an operating system. The operating system may be an Android (Android) operating system, may be an iOS operating system, or may be another possible operating system. This is not specifically limited in this embodiment of this application.

The document generation apparatus provided in this embodiment of this application is capable of implementing the processes implemented in the method embodiments of FIG. 1 to FIG. 10. To avoid repetition, details are not described herein again.

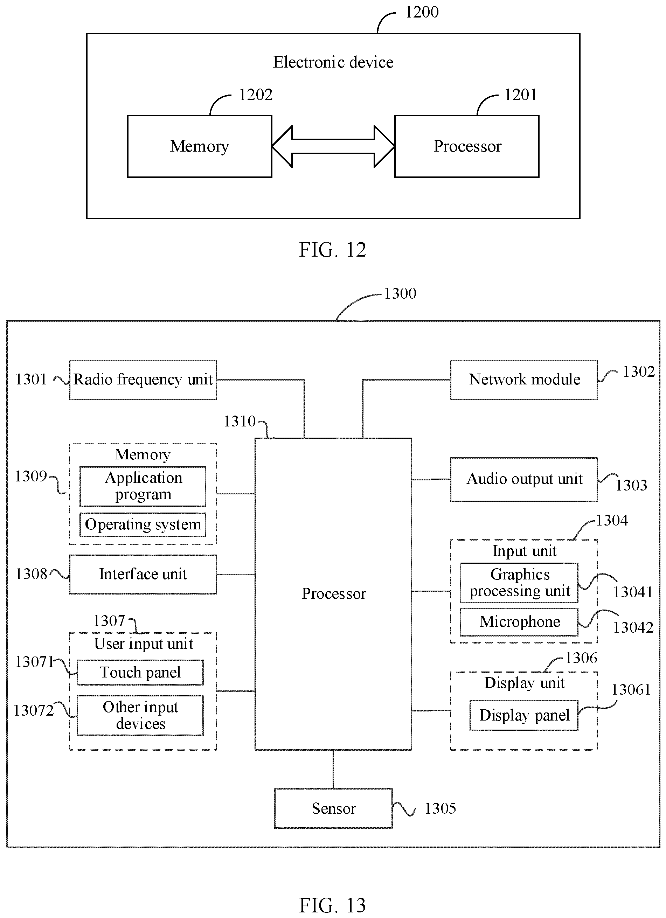

Optionally, as shown in FIG. 12, an embodiment of this application further provides an electronic device 1200, including a processor 1201, a memory 1202, and a program or instructions stored in the memory 1202 and executable on the processor 1201. When the program or the instructions are executed by the processor 1201, the processes of the foregoing document generation method embodiments are implemented, with the same technical effects achieved. To avoid repetition, details are not described herein again.

It should be noted that the electronic device in this embodiment of this application includes the foregoing mobile electronic device and non-mobile electronic device.

FIG. 13 is a schematic diagram of a hardware structure of an electronic device for implementing the embodiments of this application.

The electronic device 1300 includes but is not limited to components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art can understand that the electronic device 1300 may further include a power supply (for example, a battery) that supplies power to each component. The power supply may be logically connected to the processor 1310 by using a power management system, to implement functions such as charging management, discharging management, and power consumption management by using the power management system. The structure of the electronic device shown in FIG. 13 does not constitute a limitation on the electronic device. The electronic device may include more or fewer components than those shown in the figure, or some components may be combined, or there may be a different component layout. Details are not described herein again.

The user input unit 1307 is configured to receive a first input performed by a user for selecting a type of a to-be-generated document on a photographing preview interface.

The display unit 1306 is configured to enter a creation mode for a document of a target type and display at least one component of a to-be-generated target document in the creation mode, in response to the first input.

The user input unit 1307 is further configured to receive a second input performed by a user for adding a picture to the at least one component.

The input unit 1304 is configured to capture a target picture.

The processor 1310 is configured to add the target picture to the at least one component.

The user input unit 1307 is further configured to receive a third input for generating the target document.

The processor 1310 is further configured to generate a target document in response to the third input for generating the target document.

In this embodiment of this application, the user may flexibly select a type of a to-be-created document on the photographing preview interface, and add a corresponding picture to any position in a document by capturing a picture in real time, to quickly convert the picture into a document and generate a document with a specific organizational structure required by the user.

The user input unit 1307 is configured to receive a first sub-input performed by the user for selecting a target component in the target document, and receive a second sub-input performed by the user for capturing the target picture; and
the processor 1310 is configured to add the target picture to the target component according to an order of photographing time.

Optionally, the display unit 1306 is configured to display a directory list of the target document in the creation mode.

Optionally, the user input unit 1307 is further configured to receive a fourth input performed by a user for adjusting the target picture in the target document; and
the processor 1310 is further configured to adjust a position of the target picture in the target document in response to the fourth input.

It should be understood that, in this embodiment of this application, the input unit 1304 may include a graphics processing unit (Graphics Processing Unit, GPU) 13041 and a microphone 13042. The graphics processing unit 13041 processes image data of a static picture or a video that is obtained by an image capture apparatus (for example, a camera) in a video capture mode or an image capture mode. The display unit 1306 may include a display panel 13061. The display panel 13061 may be configured in a form of a liquid crystal display, an organic light-emitting diode, or the like. The user input unit 1307 includes a touch panel 13071 and other input devices 13072. The touch panel 13071 is also referred to as a touchscreen. The touch panel 13071 may include two parts: a touch detection apparatus and a touch controller. The other input devices 13072 may include but are not limited to a physical keyboard, a function key (such as a volume control key or an on/off key), a trackball, a mouse, and a joystick. Details are not described herein. The memory 1309 may be configured to store software programs and various data, including but not limited to an application program and an operating system. The processor 1310 may integrate an application processor and a modem processor. The application processor mainly processes an operating system, a user interface, an application program, and the like. The modem processor mainly processes wireless communication. It can be understood that the modem processor may alternatively not be integrated in the processor 1310.

An embodiment of this application further provides a readable storage medium. The readable storage medium may be non-volatile or volatile. The readable storage medium stores a program or instructions. When the program or instructions are executed by a processor, the processes of the foregoing document generation method embodiments are implemented, with the same technical effects achieved. To avoid repetition, details are not described herein again.

The processor is a processor in the electronic device in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a computer program product. The computer program product is stored in a non-transitory storage medium. The computer program product is executed by at least one processor to implement the steps of the document generation method provided in the embodiments of this application, with the same technical effects achieved. To avoid repetition, details are not described herein again.

An embodiment of this application further provides a chip. The chip includes a processor and a communications interface. The communications interface is coupled to the processor. The processor is configured to run a program or instructions, to implement the processes of the foregoing document generation method embodiments, with the same technical effects achieved. To avoid repetition, details are not described herein again.

It should be understood that the chip provided in this embodiment of this application may also be referred to as a system-level chip, a system on chip, a chip system, a system-on-a-chip, or the like.

It should be noted that the terms "include", "comprise", or any other variation thereof in this specification are intended to cover a non-exclusive inclusion, so that a process, a method, an object, or an apparatus that includes a list of elements not only includes those elements but also includes other elements that are not expressly listed, or further includes elements inherent to such a process, method, object, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, a person skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, a network device, or the like) to perform the methods in the embodiments of this application.

## Claims

1. A document generation method, performed by an electronic device, and **characterized by** comprising:
receiving (101) a first input performed by a user for selecting a type of a to-be-generated document on a photographing preview interface;
entering (102) a creation mode for a document of a target type and displaying at least one component of a to-be-generated target document in the creation mode, in response to the first input;
receiving (103) a second input performed by a user for adding a picture to the at least one component;
capturing (104) a target picture and adding the target picture to the at least one component, in response to the second input; and
generating (105) a target document in response to a third input for generating the target document;
wherein the receiving (103) a second input performed by a user for adding a picture to the at least one component comprises:
receiving a first sub-input performed by the user for selecting a target component in the target document, and receiving a second sub-input performed by the user for capturing the target picture; and
the capturing (104) a target picture and adding the target picture to the at least one component, in response to the second input comprises:
capturing the target picture and adding the target picture to the target component according to an order of photographing time, in response to the second input, wherein captured target pictures are sequentially added to their respective target component according to the order of photographing time.

2. The method according to claim 1, wherein the displaying (102) at least one component of a to-be-generated target document in the creation mode comprises:
displaying a directory list of the target document in the creation mode.

3. The method according to claim 1, further comprising:
receiving a fourth input performed by a user for adjusting the target picture in the target document; and
adjusting a position of the target picture in the target document in response to the fourth input.

4. The method according to claim 1, wherein the first input further comprises an input performed by the user for selecting a document option.

5. The method according to claim 1, wherein capturing the target picture and adding the target picture to the target component according to an order of photographing time, in response to the second input comprises:
after the target picture is added to the target component, and after another target component in the target document is selected, capturing another target picture and adding the another target picture to the another target component in the target document.

6. A document generation apparatus (1100), **characterized by** comprising:
a first receiving module (1101), configured to receive a first input performed by a user for selecting a type of a to-be-generated document on a photographing preview interface;
a display module (1102), configured to enter a creation mode for a document of a target type and display at least one component of a to-be-generated target document in the creation mode, in response to the first input;
a second receiving module (1103), configured to receive a second input performed by a user for adding a picture to the at least one component;
a photographing module (1104), configured to capture a target picture in response to the second input;
an addition module (1105), configured to add the target picture to the at least one component in response to the second input; and
a document generation module (1106), configured to generate a target document in response to a third input for generating the target document;
wherein the second receiving module (1103) comprises:
a first receiving unit, configured to receive a first sub-input performed by the user for selecting a target component in the target document; and
a second receiving unit, configured to receive a second sub-input performed by the user for capturing the target picture; and
the addition module (1105) comprises:
an addition unit, configured to add the target picture to the target component according to an order of photographing time, wherein captured target pictures are sequentially added to their respective target component according to the order of photographing time.

7. The apparatus (1100) according to claim 6, wherein the display module (1102) comprises:
a display unit, configured to display a directory list of the target document in the creation mode.

8. The apparatus (1100) according to claim 6, further comprising:
a fourth receiving module, configured to receive a fourth input performed by a user for adjusting the target picture in the target document; and
an adjustment module, configured to adjust a position of the target picture in the target document in response to the fourth input.

9. The apparatus (1100) according to claim 6, wherein the first input further comprises an input performed by the user for selecting a document option.

10. The apparatus (1100) according to claim 6, wherein the first receiving unit is configured to receive another first sub-input performed by the user for selecting another target component in the target document after the target picture is added to the target component, the second receiving unit is configured to receive another second sub-input performed by the user for capturing another target picture, and the addition unit is configured to add the another target picture to the another target component in the target document.

11. A readable storage medium, wherein the readable storage medium stores a program or instructions, and when the program or the instructions are executed by a processor (1201), steps of the document generation method according to any one of claims 1 to 5 are implemented.

12. A computer program product, wherein the computer program product is stored in a non-transitory readable storage medium, and the computer program product is executed by at least one processor (1201) to implement steps of the document generation method according to any one of claims 1 to 5.

## Patentansprüche

1. Ein Dokumenterzeugungsverfahren, das von einer elektronischen Vorrichtung durchgeführt wird und **dadurch gekennzeichnet ist, dass** es Folgendes beinhaltet:
Empfangen (101) einer ersten Eingabe, die von einem Benutzer zum Auswählen eines Typs eines zu erzeugenden Dokuments auf einer Photographievorschauschnittstelle durchgeführt wird;
Übergehen in (102) einen Erstellungsmodus für ein Dokument eines Zieltyps und Anzeigen mindestens einer Komponente eines zu erzeugenden Zieldokuments in dem Erstellungsmodus als Antwort auf die erste Eingabe;
Empfangen (103) einer zweiten Eingabe, die von einem Benutzer zum Hinzufügen eines Bilds zu der mindestens einen Komponente durchgeführt wird;
Erfassen (104) eines Zielbilds und Hinzufügen des Zielbilds zu der mindestens einen Komponente als Antwort auf die zweite Eingabe; und
Erzeugen (105) eines Zieldokuments als Antwort auf eine dritte Eingabe zum Erzeugen des Zieldokuments;
wobei das Empfangen (103) einer zweiten Eingabe, die von einem Benutzer zum Hinzufügen eines Bilds zu der mindestens einen Komponente durchgeführt wird, Folgendes beinhaltet:
Empfangen einer ersten Untereingabe, die von dem Benutzer zum Auswählen einer Zielkomponente in dem Zieldokument durchgeführt wird, und Empfangen einer zweiten Untereingabe, die von dem Benutzer zum Erfassen des Zielbilds durchgeführt wird; und
das Erfassen (104) eines Zielbilds und Hinzufügen des Zielbilds zu der mindestens einen Komponente als Antwort auf die zweite Eingabe Folgendes beinhaltet:
Erfassen des Zielbilds und Hinzufügen des Zielbilds zu der Zielkomponente gemäß einer Reihenfolge der Photographierzeit als Antwort auf die zweite Eingabe, wobei erfasste Zielbilder gemäß der Reihenfolge der Photographierzeit der Reihe nach zu ihrer jeweiligen Zielkomponente hinzugefügt werden.

2. Verfahren gemäß Anspruch 1, wobei das Anzeigen (102) mindestens einer Komponente eines zu erzeugenden Zieldokuments in dem Erstellungsmodus Folgendes beinhaltet:
Anzeigen einer Verzeichnisliste des Zieldokuments in dem Erstellungsmodus.

3. Verfahren gemäß Anspruch 1, das ferner Folgendes beinhaltet:
Empfangen einer vierten Eingabe, die von einem Benutzer zum Anpassen des Zielbilds in dem Zieldokument durchgeführt wird; und
Anpassen einer Position des Zielbilds in dem Zieldokument als Antwort auf die vierte Eingabe.

4. Verfahren gemäß Anspruch 1, wobei die erste Eingabe ferner eine Eingabe beinhaltet, die von dem Benutzer zum Auswählen einer Dokumentoption durchgeführt wird.

5. Verfahren gemäß Anspruch 1, wobei das Erfassen des Zielbilds und Hinzufügen des Zielbilds zu der Zielkomponente gemäß einer Reihenfolge der Photographierzeit als Antwort auf die zweite Eingabe Folgendes beinhaltet:
nachdem das Zielbild zu der Zielkomponente hinzugefügt wurde und nachdem eine andere Zielkomponente in dem Zieldokument ausgewählt wurde, Erfassen eines anderen Zielbilds und Hinzufügen des anderen Zielbilds zu der anderen Zielkomponente in dem Zieldokument.

6. Eine Dokumenterzeugungseinrichtung (1100), die **dadurch gekennzeichnet ist, dass** sie Folgendes beinhaltet:
ein erstes Empfangsmodul (1101), das konfiguriert ist, um eine erste Eingabe zu empfangen, die von einem Benutzer zum Auswählen eines Typs eines zu erzeugenden Dokuments auf einer Photographievorschauschnittstelle durchgeführt wird;
ein Anzeigemodul (1102), das konfiguriert ist, um in einen Erstellungsmodus für ein Dokument eines Zieltyps überzugehen und mindestens eine Komponente eines zu erzeugenden Zieldokuments in dem Erstellungsmodus als Antwort auf die erste Eingabe anzuzeigen;
ein zweites Empfangsmodul (1103), das konfiguriert ist, um eine zweite Eingabe zu empfangen, die von einem Benutzer zum Hinzufügen eines Bilds zu der mindestens einen Komponente durchgeführt wird;
ein Photographiemodul (1104), das konfiguriert ist, um ein Zielbild als Antwort auf die zweite Eingabe zu erfassen;
ein Hinzufügungsmodul (1105), das konfiguriert ist, um das Zielbild zu der mindestens einen Komponente als Antwort auf die zweite Eingabe hinzuzufügen; und
ein Dokumenterzeugungsmodul (1106), das konfiguriert ist, um ein Zieldokument als Antwort auf eine dritte Eingabe zum Erzeugen des Zieldokuments zu erzeugen;
wobei das zweite Empfangsmodul (1103) Folgendes beinhaltet:
eine erste Empfangseinheit, die konfiguriert ist, um eine erste Untereingabe zu empfangen, die von dem Benutzer zum Auswählen einer Zielkomponente in dem Zieldokument durchgeführt wird; und
eine zweite Empfangseinheit, die konfiguriert ist, um eine zweite Untereingabe zu empfangen, die von dem Benutzer zum Erfassen des Zielbilds durchgeführt wird; und das Hinzufügungsmodul (1105) Folgendes beinhaltet:
eine Hinzufügungseinheit, die konfiguriert ist, um das Zielbild zu der Zielkomponente gemäß einer Reihenfolge der Photographierzeit hinzuzufügen, wobei erfasste Zielbilder gemäß der Reihenfolge der Photographierzeit der Reihe nach zu ihrer jeweiligen Zielkomponente hinzugefügt werden.

7. Einrichtung (1100) gemäß Anspruch 6, wobei das Anzeigemodul (1102) Folgendes beinhaltet:
eine Anzeigeeinheit, die konfiguriert ist, um eine Verzeichnisliste des Zieldokuments in dem Erstellungsmodus anzuzeigen.

8. Einrichtung (1100) gemäß Anspruch 6, die ferner Folgendes beinhaltet:
ein viertes Empfangsmodul, das konfiguriert ist, um eine vierte Eingabe zu empfangen, die von einem Benutzer zum Anpassen des Zielbilds in dem Zieldokument durchgeführt wird; und
ein Anpassungsmodul, das konfiguriert ist, um eine Position des Zielbilds in dem Zieldokument als Antwort auf die vierte Eingabe anzupassen.

9. Einrichtung (1100) gemäß Anspruch 6, wobei die erste Eingabe ferner eine Eingabe beinhaltet, die von dem Benutzer zum Auswählen einer Dokumentenoption durchgeführt wird.

10. Einrichtung (1100) gemäß Anspruch 6, wobei die erste Empfangseinheit konfiguriert ist, um eine andere erste Untereingabe zu empfangen, die von dem Benutzer zum Auswählen einer anderen Zielkomponente in dem Zieldokument durchgeführt wird, nachdem das Zielbild zu der Zielkomponente hinzugefügt wurde, die zweite Empfangseinheit konfiguriert ist, um eine andere zweite Untereingabe zu empfangen, die von dem Benutzer zum Erfassen eines anderen Zielbilds durchgeführt wird, und die Hinzufügungseinheit konfiguriert ist, um das andere Zielbild zu der anderen Zielkomponente in dem Zieldokument hinzuzufügen.

11. Ein lesbares Speichermedium, wobei das lesbare Speichermedium ein Programm oder Anweisungen speichert, und, wenn das Programm oder die Anweisungen von einem Prozessor (1201) ausgeführt werden, Schritte des Dokumenterzeugungsverfahrens gemäß einem der Ansprüche 1 bis 5 implementiert werden.

12. Ein Computerprogrammprodukt, wobei das Computerprogrammprodukt in einem nichttransitorischen lesbaren Speichermedium gespeichert ist und das Computerprogrammprodukt durch mindestens einen Prozessor (1201) ausgeführt wird, um Schritte des Dokumenterzeugungsverfahrens gemäß einem der Ansprüche 1 bis 5 zu implementieren.

## Revendications

1. Un procédé de génération de document, effectué par un dispositif électronique, et **caractérisé en ce qu'**il comprend :
la réception (101) d'une première saisie effectuée par un utilisateur pour la sélection d'un type d'un document devant être généré sur une interface de prévisualisation de photographie ;
l'entrée (102) dans un mode de création pour un document d'un type cible et l'affichage d'au moins un composant d'un document cible devant être généré dans le mode de création, en réponse à la première saisie ;
la réception (103) d'une deuxième saisie effectuée par un utilisateur pour l'ajout d'une image à l'au moins un composant ;
la capture (104) d'une image cible et l'ajout de l'image cible à l'au moins un composant, en réponse à la deuxième saisie ; et
la génération (105) d'un document cible en réponse à une troisième saisie pour la génération du document cible ;
dans lequel la réception (103) d'une deuxième saisie effectuée par un utilisateur pour l'ajout d'une image à l'au moins un composant comprend :
la réception d'une première sous-saisie effectuée par l'utilisateur pour la sélection d'un composant cible dans le document cible, et la réception d'une deuxième sous-saisie effectuée par l'utilisateur pour la capture de l'image cible ; et
la capture (104) d'une image cible et l'ajout de l'image cible à l'au moins un composant, en réponse à la deuxième saisie, comprennent :
la capture de l'image cible et l'ajout de l'image cible au composant cible selon un ordre de temps de photographie, en réponse à la deuxième saisie, les images cibles capturées étant séquentiellement ajoutées à leur composant cible respectif selon l'ordre de temps de photographie.

2. Le procédé selon la revendication 1, dans lequel l'affichage (102) d'au moins un composant d'un document cible devant être généré dans le mode de création comprend :
l'affichage d'une liste répertoire du document cible dans le mode de création.

3. Le procédé selon la revendication 1, comprenant en outre :
la réception d'une quatrième saisie effectuée par un utilisateur pour l'ajustement de l'image cible dans le document cible ; et
l'ajustement d'une position de l'image cible dans le document cible en réponse à la quatrième saisie.

4. Le procédé selon la revendication 1, dans lequel la première saisie comprend en outre une saisie effectuée par l'utilisateur pour la sélection d'une option de document.

5. Le procédé selon la revendication 1, dans lequel la capture de l'image cible et l'ajout de l'image cible au composant cible selon un ordre de temps de photographie, en réponse à la deuxième saisie, comprennent :
après que l'image cible a été ajoutée au composant cible, et après qu'un autre composant cible dans le document cible a été sélectionné, la capture d'une autre image cible et l'ajout de cette autre image cible à cet autre composant cible dans le document cible.

6. Un appareil de génération de document (1100), **caractérisé en ce qu'**il comprend :
un premier module de réception (1101), configuré pour recevoir une première saisie effectuée par un utilisateur pour la sélection d'un type d'un document devant être généré sur une interface de prévisualisation de photographie ;
un module d'affichage (1102), configuré pour entrer dans un mode de création pour un document d'un type cible et afficher au moins un composant d'un document cible devant être généré dans le mode de création, en réponse à la première saisie ;
un deuxième module de réception (1103), configuré pour recevoir une deuxième saisie effectuée par un utilisateur pour l'ajout d'une image à l'au moins un composant ;
un module de photographie (1104), configuré pour capturer une image cible en réponse à la deuxième saisie ;
un module d'ajout (1105), configuré pour ajouter l'image cible à l'au moins un composant en réponse à la deuxième saisie ; et
un module de génération de document (1106), configuré pour générer un document cible en réponse à une troisième saisie pour la génération du document cible ;
dans lequel le deuxième module de réception (1103) comprend :
une première unité de réception, configurée pour recevoir une première sous-saisie effectuée par l'utilisateur pour la sélection d'un composant cible dans le document cible ; et
une deuxième unité de réception, configurée pour recevoir une deuxième sous-saisie effectuée par l'utilisateur pour la capture de l'image cible ; et
le module d'ajout (1105) comprend :
une unité d'ajout, configurée pour ajouter l'image cible au composant cible selon un ordre de temps de photographie, les images cibles capturées étant séquentiellement ajoutées à leur composant cible respectif selon l'ordre de temps de photographie.

7. L'appareil (1100) selon la revendication 6, dans lequel le module d'affichage (1102) comprend :
une unité d'affichage, configurée pour afficher une liste répertoire du document cible dans le mode de création.

8. L'appareil (1100) selon la revendication 6, comprenant en outre :
un quatrième module de réception, configuré pour recevoir une quatrième saisie effectuée par un utilisateur pour l'ajustement de l'image cible dans le document cible ; et
un module d'ajustement, configuré pour ajuster une position de l'image cible dans le document cible en réponse à la quatrième saisie.

9. L'appareil (1100) selon la revendication 6, dans lequel la première saisie comprend en outre une saisie effectuée par l'utilisateur pour la sélection d'une option de document.

10. L'appareil (1100) selon la revendication 6, dans lequel la première unité de réception est configurée pour recevoir une autre première sous-saisie effectuée par l'utilisateur pour la sélection d'un autre composant cible dans le document cible après que l'image cible a été ajoutée au composant cible, la deuxième unité de réception est configurée pour recevoir une autre deuxième sous-saisie effectuée par l'utilisateur pour la capture d'une autre image cible, et l'unité d'ajout est configurée pour ajouter cette autre image cible à cet autre composant cible dans le document cible.

11. Un support de stockage lisible, le support de stockage lisible stockant un programme ou des instructions, et lorsque le programme ou les instructions sont exécutés par un processeur (1201), des étapes du procédé de génération de document selon l'une quelconque des revendications 1 à 5 sont mises en œuvre.

12. Un produit programme d'ordinateur, le produit programme d'ordinateur étant stocké dans un support de stockage lisible non transitoire, et le produit programme d'ordinateur étant exécuté par au moins un processeur (1201) pour mettre en œuvre des étapes du procédé de génération de document selon l'une quelconque des revendications 1 à 5.
